# EUROPÄISCHE PATENTSCHRIFT

(11) **EP 2 821 198 B1**
(45) Veröffentlichungstag und Bekanntmachung des Hinweises auf die Patenterteilung: **13.05.2020**
(21) Anmeldenummer: 14175683.3
(22) Anmeldetag: 03.07.2014
(51) Int. Cl.: B29C 31/08, B29C 70/38, B29B 11/16, B29C 35/02

(54) **Faserhalbzeug-Ablegekopf**
Depositing head for semi-finished fibre products
Tête d'amenée de semi-produit à base de fibres

(30) Priorität: 05.07.2013 DE 102013107103
(43) Veröffentlichungstag der Anmeldung: 07.01.2015
(73) Patentinhaber: Deutsches Zentrum für Luft- und Raumfahrt e.V., 51147 Köln (DE)
(72) Erfinder: Grohmann, Yannis, 20249 Hamburg (DE); Zacharias, Fabian, 01328 Dresden (DE)
(74) Vertreter: Aisch, Sebastian

(56) Entgegenhaltungen:
- DE-A1- 10 012 378
- DE-A1-102006 060 361
- DE-A1-102011 102 950
- DE-A1-102011 109 698
- DE-A1-102011 121 883
- FR-A1- 2 865 156

## Beschreibung

Die Erfindung betrifft eine Faser-Legevorrichtung mit einem Faserhalbzeug-Ablegekopf zum Legen von Faserhalbzeugen in oder auf das Formwerkzeug sowie ein Verfahren hierzu.

Bauteile aus einem Faserverbundwerkstoff, sogenannte Faserverbundbauteile, sind aus der Luft- und Raumfahrt heute nicht mehr wegzudenken. Aber auch im Automobilbereich findet die Verwendung derartiger Werkstoffe immer mehr Zuspruch. Insbesondere kritische Strukturelemente werden aufgrund der hohen gewichtsspezifischen Festigkeit und Steifigkeit bei minimalem Gewicht aus faserverstärkten Kunststoffen gefertigt. Durch die aus der Faserorientierung resultierenden anisotropen Eigenschaften der Faserverbundwerkstoffe können Bauteile exakt an lokale Belastungen angepasst werden und ermöglichen so eine optimale Materialausnutzung im Sinne des Leichtbaus.

Im Fertigungsprozess kommen neben trockenen Faserhalbzeugen wie Gelegen, Gewebe oder auch meist vorbebinderte trockene Rovings auch sogenannte Prepregs (mit einem Matrixmaterial vorimprägnierte Faserhalbzeuge) zum Einsatz. Durch die immer höheren Stückzahlen bei der Produktion von faserverstärkten Bauteilen, insbesondere in der Serienproduktion, bestehen große Bestrebungen, den Herstellungsprozess weitestgehend zu automatisieren, ohne dabei die Qualität des Herstellungsprozesses bzw. der herzustellenden Bauteile negativ zu beeinflussen.

Damit die spätere Bauteilform aus den Faserhalbzeugen entsteht, werden die Faserhalbzeuge nicht selten in oder auf ein Formwerkzeug abgelegt, bspw. unter Aufbringen einer äußeren Kraft, wobei deren Werkzeugoberfläche eine der späteren Bauteilform entsprechende Geometrie oder eine Vorstufe davon aufweist. Insbesondere im automatisierten Herstellungsprozess wird dieser Ablegeprozess (auch häufig Preforming genannt) mit Hilfe von Faser-Legevorrichtungen (Portalanlagen, Roboteranlagen) durchgeführt, bei denen die Endeffektoren sogenannte Faserhalbzeug-Ablegeköpfe sind. Derartigen Ablegeköpfen werden Faserhalbzeuge, insbesondere flächige Faserhalbzeuge, Tapes, Slittapes oder Rovings, mittels einer Materialbereitstellungseinrichtung zugeführt, so dass sie in oder auf das Formwerkzeug abgelegt werden können.

Gerade bei großen Bauteilen, wie beispielsweise Flügelschalen oder Rotorblättern von Windkraftanlagen, werden die als Meterware bereitgestellten Faserhalbzeuge großflächig auf die Werkzeugform abgelegt. Insbesondere bei einem mehrlagigen Aufbau ergibt sich hierbei dann die Notwendigkeit, die einzelnen Lagen gegeneinander anzuheften bzw. zu fixieren, um ein Verrutschen oder Verschieben der hochgenau abgelegten Faserhalbzeugen zu vermeiden, was bspw. durch Erwärmung der Faserhalbzeuge geschehen kann. Diese Problematik wird dann noch verschärft, wenn die Faserhalbzeuge auf ein vertikal aufgestelltes Formwerkzeug abgelegt werden sollen.

Zur Fixierung eignen sich zum einen bspw. Bindermaterialien, die beispielsweise in Pulverform oder Vliesform eingebracht wurden. Durch das Einbringen von Wärmeenergie in die Faserhalbzeuge können diese Bindermaterialien dann thermisch aktiviert werden, so dass ein Anheften der einzelnen Faserhalbzeuge bewirkt wird. Bei den sogenannten Prepregs kann darüber hinaus durch ein Erwärmen der Faserhalbzeuge und des bereits vorimprägnierten Matrixmaterial die Klebrigkeit und somit die Adhäsion der Faserhalbzeug gegeneinander erhöht werden. Auch hierdurch kann ein Anheften erreicht werden, um das Verrutschen oder Verschieben der Faserhalbzeuge zu vermeiden. Im anschließenden Herstellungsprozess können dann die Faserhalbzeuge zusammen mit dem injizierten Matrixmaterial vollständig ausgehärtet werden. Ein weiterer Vorteil von Wärmeenergie bei sogenannten Prepregs ist die Tatsache, dass leicht aufgewärmte Prepregs wesentliche bessere Verarbeitungseigenschaften aufweisen, was den automatisierten Preformschritt deutlich qualitätssicherer gestaltet.

Aus der DE 10 2011 076 463 A1 ist ein Reparaturverfahren für ein Formteil aus einem Kunststoffmaterial bekannt, bei dem ein passives Heizelement in dem Reparaturbereich vorgesehen ist, das berührungslos von außen mit einem magnetischen Wechselfeld beaufschlagt wird.

Aus der DE 103 530 70 A1 ist ein Verfahren und eine Vorrichtung zur Binderaktivierung von Faserhalbzeugen bekannt, bei dem in dem Formwerkzeug zwei Elektroden vorgesehen sind, die mit den insbesondere äußeren Randbereichen der Preform in Berührung stehen. Wird nun eine Spannung an die Elektroden angelegt, so erfolgt ein Stromfluss durch die Preform, was zu einer Erwärmung und somit zu einer Binderaktivierung führt. Nachteilig hierbei ist jedoch, dass die gesamte Preform erwärmt werden soll, was insbesondere bei einer Preform mit großem Lagenaufbau zu hohen Stromflüssen führt. Denn durch die Anordnung der Elektroden im Formwerkzeug erfolgt in der Regel der Stromfluss durch die unteren Faserhalbzeuglagen, so dass ein Binderaktivierung in höheren Faserhalbzeuglagen nur durch eine hohe Wärmeabstrahlung der unteren Lagen und somit durch einen hohen Stromfluss erreicht werden kann.

Aus der DE 10 2011 108 157 A1 ist ein Formwerkzeug zur Herstellung von Faserverbundbauteilen bekannt, bei dem in dem Formwerkzeug eine Mehrzahl von Induktionsvorrichtungen vorgesehen sind, um so in das Formwerkzeug eingebrachte Faserverbundbauteile mittels Induktion zu erwärmen.

Eine ähnliche Vorrichtung ist auch aus der DE 10 2006 040 049 A1 bekannt, bei dem unter einem Vakuumsack die Faserhalbzeuglagen auf dem Formwerkzeug angeordnet sind. Durch eine Druckdifferenz werden die Kohlenstofffasern aneinander angedrückt, wobei mit Hilfe eines magnetischen Wechselfeldes elektrische Ströme in den Kohlenstofffasern zur Binderaktivierung erzeugt werden.

Aus der DE 10 2008 020 564 A1 ist eine Tapelegevorrichtung bekannt, bei der die Anpressrolle so ausgebildet ist, dass mit Hilfe von Infrarotstrahlung oder Induktion die abgelegten Fasertapes mit Wärmeenergie beaufschlagt werden können.

Aus der DE 10 2011 102 950 A1 ist ein Legekopf zur Herstellung von Textilvorformlingen aus Karbonfasern bekannt, wobei der Ablegekopf eine Elektrode und eine Gegenelektrode hat.

Aus der DE 100 12 378 A1 ist ein Verfahren und eine Vorrichtung zum Anhaften von faserverstärkten Faserbändern bekannt, wobei hier das Werkzeug einen ersten Pol und das Fasermaterial einen zweiten Pol bildet, so dass das Fasermaterial auf der elektrisch isolierenden Werkzeugoberfläche abgelegt und anhaften kann.

Aus der DE 10 2011 121 883 A1 ist ein Verfahren und eine Vorrichtung zur Herstellung eines Formteils bekannt, wobei ein Formwerkzeug aus mehreren Teilen bereitgestellt wird, wobei zumindest in einem Teil des Formwerkzeugs eine Elektrode angeordnet ist.

Aus der FR 2 865 156 A1, die eine Vorrichtung gemäß dem Oberbegriff des Anspruchs 1 und ein Verfahren gemäß dem Oberbegriff des Anspruchs 13 offenbart, ist eine Fasermaschine bekannt, mit der einzelne Fasern auf eine Oberfläche abgelegt werden sollen.

Aus der DE 10 2006 060 361 A1 ist ein Transportgreifer zum Transportieren eines flexiblen Flächenmaterials bekannt, wobei der Transportgreifer eine Transportrolle bzw. Transportrolle aufweist, deren Mantelfläche Elektroden angeordnet sind, um das flexible Flächenmaterial mithilfe der Elektrostatik zu greifen.

Des Weiteren ist es aus der Praxis bekannt, mittels Laser oder mittels Infrarotstrahlern die Faserhalbzeuge zu Erwärmen, um die gewünschten Effekte zu erzielen. Bei Infrarotstrahlern hat es sich als nachteilig erweisen, dass der Energieeintrag in die Faserhalbzeuge nicht zielgerichtet gesteuert werden kann und oft zu gering ist. Laser sind hingegen oft teuer in der Anschaffung und Unterhaltung.

Ein weiterer Nachteil beim Einbringen von Wärmeenergie mittels Ultraschall besteht darüber hinaus darin, dass derartige Anlagen zum einen sehr komplex und aufwendig sind, und zum anderen aufgrund der Ultraschallanregung meist starke Faserondulationen entstehen, die Fehlstellen im Bauteil hervorrufen können und für viele Anwendungen nicht zulässig sind. Induktionsverfahren sind in der Anschaffung sehr teuer und können nicht immer reproduzierbar angewendet werden. Darüber hinaus stellt die erforderliche Abschirmung bei der Verwendung von Mikrowellen ein großes Hemmnis für diese Technologie dar.

Es ist daher Aufgabe der vorliegenden Erfindung eine verbesserte Vorrichtung und ein verbessertes Verfahren zum Legen von Faserhalbzeugen anzugeben, mit der das Erwärmen von Faserhalbzeugen vereinfacht werden kann, um so den Ablageprozess schneller und effizienter zu gestalten, ohne dabei die Qualität des späteren Bauteils negativ zu beeinflussen.

Die Aufgabe der vorliegenden Erfindung wird mit den Merkmalen des Patentanspruches 1 sowie mit den Merkmalen des nebengeordneten Verfahrensanspruches 13 gelöst.

Die Erfindung betrifft einen Faserhalbzeug-Ablegekopf zum Legen von Faserhalbzeugen in oder auf das Formwerkzeug. Demnach wird weiterhin ein Faserhalbzeug-Ablegekopf zum Legen von Faserhalbzeugen in oder auf das Formwerkzeug vorgeschlagen, wobei der Ablegekopf zum Zuführen der Faserhalbzeuge durch eine Materialbereitstellungseinrichtung ausgebildet ist. Erfindungsgemäß weist der Faserhalbzeug-Ablegekopf mindestens eine mit einer elektrischen Energiequelle zum Anlegen einer Spannung verbindbaren elektrischen Elektrode auf, die mit den zugeführten Faserhalbzeugen elektrisch kontaktiert ist und die mit mindestens einer mit den Faserhalbzeugen ebenfalls elektrisch kontaktierten Gegenelektrode derart zusammenwirkt, dass in einem durch die Kontaktierung der Elektrode und der Gegenelektrode definierten Abschnitt der Faserhalbzeuge ein Stromfluss bewirkt wird. Erfindungsgemäß wird eine Faser-Legevorrichtung zur Herstellung eines Fasergeleges eines Faserverbundbauteils mit einem Formwerkzeug zum Ablegen von Faserhalbzeugen und mit einem Faserhalbzeug-Ablegekopf vorgeschlagen. Erfindungsgemäß ist die mindestens eine Elektrode in dem Faserhalbzeug-Ablegekopf angeordnet, während die mindestens eine Gegenelektrode durch das Formwerkzeug oder durch eine zumindest teilweise elektrisch leitende Werkzeugoberfläche gebildet wird.
Es wird somit erfindungsgemäß vorgeschlagen, dass zumindest eine Elektrode in dem Faserhalbzeug-Ablegekopf angeordnet ist, so dass ein genau definierter und regelbarer Stromfluss in zumindest einem Teil der zugeführten Faserhalbzeuge bewirkt werden kann. Durch den Stromfluss durch die zugeführten Faserhalbzeuge werden die Faserhalbzeuge erwärmt, so dass mit Hilfe des definierten Stromflusses thermische Energie in die Faserhalbzeuge eingebracht werden kann. Mit Hilfe der eingebrachten thermischen Energie kann beispielsweise ein Binder aktiviert werden, um die Faserhalbzeuge zu fixieren. Hierdurch wird während des Faserablegeprozesses eine optimale Anhaftung der Fasern an dem Ablegegrund (entweder das Werkzeug oder vorher abgelegte Faserlagen) gewährleistet. Darüber hinaus werden bei Prepregs durch den Eintrag der thermischen Energie die Verarbeitungseigenschaften wesentlich verbessert, und zwar genau an der Stelle, an der sie für den Ablegeprozess notwendig sind.

Bei thermoplastischen Prepregs wird die Matrix aufgeschmolzen, so dass bei der Ablage der Faserhalbzeuge direkt eine Konsolidierung stattfinden kann. Bei duroplastischen Prepregs wird durch die Erwärmung die Anhaftung verbessert.

Zwar ist es an und für sich bekannt, mit Hilfe eines in den Faserhalbzeugen bewirkten Stromflusses eine Erwärmung der Faserhalbzeuge zu erreichen. Allerdings ist gegenüber bekannten Verfahren der Energieeintrag sehr genau und direkt steuer- und regelbar ist, so dass eine sehr gezielte und genaue Erwärmung möglich ist. Dabei ist der Energieeintrag verglichen mit Infrarot höher, wobei Wärme derart erzeugt werden kann, wo sie benötigt wird, nämlich zwischen den Fasern. So lässt sich eine nur lokal begrenzte Erwärmung der abzulegenden Faserhalbzeuge erreichen, und zwar bereits während des Ablegens der Faserhalbzeuge. Hierdurch lässt sich der Aufbau der notwendigen Anlage wesentlich vereinfachen und gleichzeitig flexibel für jedwede Bauteilgeometrie verwenden.

Die Erfinder haben dabei erkannt, dass durch eine lokal begrenzte Erwärmung der dem Ablegekopf zugeführten Faserhalbzeuge eine so ausreichende Fixierung oder Verbesserung der Ablegeeigenschaften erreicht werden kann, dass ein Verschieben und Verrutschen der einzelnen Faserhalbzeuge vermieden wird. Vielmehr haben die Erfinder erkannt, dass mit Hilfe eines derartigen Ablegekopfes insbesondere Faserhalbzeuge auch auf vertikal aufgestellten Formwerkzeugen sicher abgelegt werden können, ohne ein Ablösen der Faserhalbzeuge von der Werkzeugoberfläche oder von bereits abgelegten Faserhalbzeugen befürchten zu müssen. Erfindungsgemäß wurde dabei erkannt, dass ein Stromfluss im Bereich des Ablegens bzw. während des eigentlichen Ablegeprozesses ausreichend ist, um die notwendige Erwärmung für die beschriebenen Vorteile zu erreichen.

Zudem erlaubt die Erfindung eine sehr präzise regelbare, sichere und schnelle Erwärmung der Faserhalbzeuge, wodurch sich die Faserhalbzeuge schnell und sicher fixieren lassen.

Unter einem Faserhalbzeug werden sowohl trockene Faserhalbzeuge als auch vorimprägnierte Faserhalbzeuge, sogenannte Prepregs, verstanden. Bei Prepregs werden auch mit thermoplastischen oder duroplastischen Matrixmaterialen vorimpregnierte Faserhalbzeuge subsumiert.

Unter dem Fixieren der Faserhalbzeuge wird dabei insbesondere verstanden, dass aneinander anliegende Faserhalbzeuge miteinander stoffschlüssig verbunden werden, beispielsweise durch Aktivierung eines Bindermaterials oder durch Aufschmelzen oder Erwärmen von bereits vorimpregnierten Matrixmatrial oder anderen Kunststoffverbindungen. Das Fixieren der Faserhalbzeuge soll ein Anheften der Faserhalbzeuge gegeneinander so erzeugen, dass ein Verschieben der Faserhalbzeuge im weiteren Herstellungsprozess verhindert werden kann, oder eine Konsolidierung erreicht werden, um die Geometrie des abgelegten Fasermaterials zu fixieren.

Ein derartiger Faserhalbzeug-Ablegekopf weist in der Regel mindestens eine Ablegeeinheit auf, die zum Ablegen der dem Faserhalbzeug-Ablegekopf zugeführten Faserhalbzeuge in oder auf das Formwerkzeug ausgebildet ist. Eine solche Ablegeeinheit kann beispielsweise eine Ablegerolle oder Ablegewalze, aber auch ein entsprechend geformter Gleitschuh sein. Die dem Ablegekopf zugeführten flächigen Faserhalbzeuge werden dabei an der Ablegeeinheit so entlang geführt, dass zumindest eine Seite der Faserhalbzeuge in Ablegerichtung zeigen und so in oder auf das Formwerkzeug eingebracht werden können. Eine solche Ablegeeinheit dient des Weiteren auch dazu, die für das Ablegen und Anhaften notwendige Kraft prozesssicher zu bewirken. So werden mit Hilfe der Ablegeeinheit die Faserhalbzeuge auf oder in das Formwerkzeug mit einer vorbestimmten Kraft gedrückt.

Vorteilhafterweise ist die mindestens eine Elektrode des Faserhalbzeug-Ablegekopfes
- an der mindestens einen Ablegeeinheit zumindest teilweise angeordnet,
- aus der mindestens einen Ablegeeinheit selbst gebildet, oder
- im Bezug auf die Zuführrichtung der zugeführten Faserhalbzeuge vor oder nach der Ablegeeinheit angeordnet.

So ist es denkbar, dass die Elektrode zumindest teilweise an der Ablegeeinheit angeordnet ist. So ist es beispielsweise besonders vorteilhaft, wenn bei einer Ablegerolle oder Ablegewalze als Ablegeeinheit die Elektrode am Umfang der Rolle oder Walze ganz oder in bestimmten Abständen vorgesehen ist, so dass sich während des Ablegens ein Stromfluss je nach Abrollwinkel einstellen lässt. Denkbar ist aber auch, dass um den gesamten Umfang der Ablegerolle herum ein entsprechendes elektrisch leitfähiges Material angeordnet ist, um die Elektrode in dem Faserhalbzeug-Ablegekopf zu bilden.

Es ist auch denkbar, dass die Elektrode durch die mindestens eine Ablegeeinheit selbst gebildet wird, indem die Ablegeeinheit selber aus einem elektrisch leitfähigen Material besteht. So kann die Ablegeeinheit beispielsweise eine Ablegerolle aus einem metallischen Material sein.

Des Weiteren ist es denkbar, dass die Elektrode im Bezug auf die Zuführrichtung der zugeführten Faserhalbzeuge vor oder nach der Ablegeeinheit angeordnet ist. Dieses ist beispielsweise dann vorteilhaft, wenn die Gegenelektrode nicht in dem Faserhalbzeug-Ablegekopf angeordnet ist, sondern außerhalb, beispielsweise in der Materialbereitstellungsvorrichtung oder in dem Formwerkzeug. Ist die Elektrode des Faserhalbzeug-Ablegekopfes in Zufuhrrichtung vor der Ablegeeinheit angeordnet, so ergibt sich bei einer Gegenelektrode im Formwerkzeug ein Stromfluss ausgehend von der Kontaktierung mit der Elektrode bis hin zu der Kontaktierung der Faserhalbzeuge mit dem Formwerkzeug, was in der Regel durch die Ablegeeinheit definiert wird.

Somit wird es möglich, einen Stromfluss in den dem Ablegekopf zugeführten Faserhalbzeugen zu bewirken, bevor die Faserhalbzeuge abgelegt werden, während die Faserhalbzeuge abgelegt werden oder kurz nachdem sie abgelegt wurden. Hierdurch lässt sich gezielt und lokal stark begrenzt eine Erwärmung erreichen, die sich als besonders vorteilhaft herausgestellt hat, um die Faserhalbzeuge entsprechend an oder in das Formwerkzeug anzuheften.

In einer weiteren vorteilhaften Ausführungsform ist mindestens eine weitere Gegenelektrode, die für den Stromfluss mit der Elektrode entsprechend zusammenwirkt, in oder an dem Faserhalbzeug-Ablegekopf angeordnet, und zwar derart, dass die mindestens eine Gegenelektrode mit den dem Faserhalbzeug-Ablegekopf zugeführten Faserhalbzeugen elektrisch kontaktiert ist. Zwischen Elektrode und Gegenelektrode wird dann über den entsprechenden Abschnitt der Faserhalbzeuge ein Stromfluss bewirkt.

Dieses Ausführungsbeispiel hat den besonderen Vorteil, dass die Elektrode und die Gegenelektrode gemeinsam in dem Ablegekopf vorgesehen sind, so dass eine entsprechende Faser-Legevorrichtung beispielsweise keine zusätzliche Gegenelektrode in dem Formwerkzeug benötigt. Dies vereinfacht den Aufbau und die Flexibilität der verwendeten Anlagen und Endeffektoren. Hierbei ist es vorteilhaft, wenn die Gegenelektrode in Bezug auf die Zuführrichtung der zugeführten Faserhalbzeuge vor oder nach der mindestens einen Elektrode beabstandet angeordnet ist. Hierdurch lässt sich in einem Abschnitt der zugeführten Faserhalbzeuge kontinuierlich ein Stromfluss zur Erwärmung bewirken.

Denkbar ist aber auch, dass die weitere Gegenelektrode in Bezug auf eine an dem Faserhalbzeug-Ablegekopf vorgesehenen Ablegeeinheit in Zuführrichtung vor oder nach der Ablegeeinheit angeordnet ist. Im Zusammenhang mit einer Elektrode an der Ablegeeinheit wird so wiederum ein entsprechender Stromfluss in einem bestimmten Abschnitt der Faserhalbzeuge bewirkt.

In einer vorteilhaften Ausführungsform sind mindestens zwei Ablegeeinheiten an dem Ablegekopf angeordnet, die nebeneinander oder nacheinander zum Ablegen von zugeführten Faserhalbzeugen ausgebildet sind. Dabei ist die eine Ablegeeinheit so ausgebildet, dass sie als Elektrode vorgesehen ist, während die andere Ablegeeinheit die weitere Gegenelektrode bildet, so dass in einem Abschnitt der zugeführten Faserhalbzeuge zwischen den beiden Ablegeeinheiten ein Stromfluss bewirkt wird.

In einer weiteren vorteilhaften Ausführungsform wird vorgeschlagen, dass die zugeführten Faserhalbzeuge mit der Elektrode an einer ersten Seite der Faserhalbzeuge kontaktiert werden, während die weitere Gegenelektrode die Faserhalbzeuge an einer der ersten der gegenüberliegenden zweiten Seite elektrisch kontaktiert. So ist es denkbar, dass Elektrode und die weitere Gegenelektrode an jeweils gegenüberliegenden Seiten vorgesehen sind, so dass ein Stromfluss durch die flächigen Faserhalbzeuge hindurch bewirkt wird.

In einer weiteren vorteilhaften Ausführungsform ist die mindestens eine Elektrode, die mindestens eine weitere Gegenelektrode, mindestens eine der Ablegeeinheiten und/oder der Faserhalbzeug-Ablegekopf selbst zum Aufbringen einer Kraft in Richtung der zugeführten Faserhalbzeuge zur Kompaktierung der Fasern der Faserhalbzeuge ausgebildet, so dass im Bereich der Kompaktierung im Bereich der Elektroden und/oder Gegenelektroden ein verbesserter Stromfluss durch das Faserhalbzeug bewirkt wird, da der Übergangswiderstand zwischen Elektrode/ Gegenelektrode und Fasermaterial sowie auch innerhalb des Fasermaterials reduziert wird. Hierdurch lässt sich gezielt der Energieeintrag in das Faserhalbzeug steuern.

In einer weiteren vorteilhaften Ausführungsform hat der Faserhalbzeug-Ablegekopf mindestens eines Walze, die über eine Umfangsfläche mit den zugeführten Faserhalbzeugen kontaktiert ist und die in ihrer Umfangsfläche die mindestens eine Elektrode und/oder Gegenelektrode zur elektrischen Kontaktierung mit den Faserhalbzeugen aufweist. Dabei kann auch ein Walzenpaar vorgesehen sein, was aus mindestens zwei Walzen besteht, wobei die eine Walze die Elektrode und die andere Walze die weitere Gegenelektrode trägt oder wo ein Walzenpaar ausschließlich die Elektroden hat und ein anderes Walzenpaar ausschließlich die Gegenelektroden. Auch hierbei ist vorteilhaft, wenn die mindestens eine Walze zum Aufbringen einer Kraft in Richtung der Faserhalbzeuge ausgebildet ist.

So lassen sich auch mehrere Walzen, jeweils versehen mit Elektrode und/oder Gegenelektrode, in dem Ablegekopf so anordnen, dass unterschiedliche Kontaktierungspositionen abgebildet werden. denkbar ist auch, dass auf einer Walze sowohl Elektrode als auch Gegenelektrode (gegeneinander isoliert) angeordnet sind, um einen Stromfluss quer zur Ablegerichtung zu bewirken.

In einer weiteren Ausführungsform sind die Elektroden und/oder Gegenelektroden radial abstehend an der oder den Walze(n) angeordnet, so dass hierdurch die aufgebrachte Anpresskraft im Bereich der Elektroden und/oder Gegenelektroden erhöht wird, was eine verbesserte Kompaktierung zur Folge hat. Denkbar ist auch, dass die Elektroden und/oder Gegenelektroden radial am Umfang der Walze nach einem Muster verteilt sind, so dass bei der Drehbewegung der Walze ein entsprechendes Kontaktierungsmuster über die Zeit bewirkt wird. Hierbei können auch Elektrode und Gegenelektrode abwechselnd angeordnet sein.

Denkbar ist auch, dass an einer Walze mehrere Elektroden und/oder Gegenelektroden umlaufend und axial beabstandet vorgesehen sind.

In einer weiteren vorteilhaften Ausführungsform ist eine Leistungsregeleinheit vorgesehen, die zum Regeln der elektrischen Leistung des in dem Faserhalbzeug bewirkten Stromflusses in Abhängigkeit von einer Geschwindigkeit des Faserhalbzeug-Ablegekopfes eingerichtet ist. Eine derartige Leistungsregeleinheit kann beispielsweise in dem Ablegekopf oder in der mit dem Ablegekopf verbundenen elektrischen Energiequelle angeordnet sein. So kann beispielsweise die elektrische Leistung bei geringeren Geschwindigkeiten niedriger sein und mit zunehmender Geschwindigkeit erhöht werden. Dadurch wird der Vorteil erreicht, dass beim Anfahren des Ablegekopfes zu Beginn des Ablegeprozesses kein zu hoher Energieeintrag in die zugeführten und/oder abgelegten Faserhalbzeuge bewirkt wird, was zu Beschädigungen der Faserhalbzeuge führen kann. Vielmehr wird die elektrische Leistung so geregelt, dass sie sich der Geschwindigkeit des Ablegekopfes, insbesondere der Ablegegeschwindigkeit, anpasst.

In einer weiteren vorteilhaften Ausführungsform weist der Ablegekopf eine Mehrzahl von elektrischen Elektroden und gegebenenfalls eine Mehrzahl von elektrischen Gegenelektroden auf, wobei eine Elektrodensteuereinheit vorgesehen ist, die eingereichtet ist, nacheinander jeweils an einem der Elektroden eine elektrische Spannung anzulegen und die übrigen Elektroden und/oder Gegenelektroden derart zu schalten, dass ein Stromfluss zwischen der jeweiligen Elektrode und einer vorgegebenen Gegenelektrode bewirkt wird. So wird nacheinander an jede Elektrode eine Spannung angelegt, um einen Stromfluss zu bewirken, wobei die entsprechenden übrigen Elektroden und Gegenelektroden so geschaltet werden, dass ein Stromfluss genau zwischen der Elektrode, an der die Spannung angelegt wurde, und einer definierten Gegenelektrode bewirkt wird. Hierdurch wird der Vorteil erreicht, dass insbesondere bei großflächigen Faserhalbzeugen eine ausreichende und großflächige Temperierung erreicht werden kann. Die Elektroden werden dabei sequentiell nacheinander geschaltet. Die Elektrodensteuereinheit kann beispielsweise Bestandteil des Faserhalbzeug-Ablegekopfes sein oder Bestandteil der elektrischen Energiequelle.

Die Elektroden und gegebenenfalls die Gegenelektroden können dabei in dem Faserhalbzeug-Ablegekopf beabstandet voneinander angeordnet sein, beispielsweise beabstandet in Zuführrichtung oder beabstandet orthogonal zur Zuführrichtung.

Darüber hinaus ist es besonders vorteilhaft, wenn die eine Steuereinheit vorgesehen ist, die zum Steuern des Anlegens der Spannung an die Elektrode und/oder Gegenelektrode so eingerichtet ist, dass ein definierter Energieeintrag in das Faserhalbzeug bewirkt wird. Vorteilhafterweise ist die Steuereinheit derart eingerichtet, dass durch Steuerung des Anlegens der Spannung der Energieeintrag zeitlich gesteuert wird, beispielsweise derart, dass ein vorgegebener Energieeintrag pro Fläche und/oder Länge der Faserhalbzeuge bewirkt wird. Darüber hinaus ist es hierbei vorteilhaft, wenn bei mehreren Elektroden und/oder Gegenelektroden die Energiequelle mittels der Steuereinheit so eingerichtet ist, dass die Elektroden und/oder Gegenelektroden separat angesprochen werden können, wodurch sich verschiedenste Stromflussmuster innerhalb der Faserhalbzeuge erzeugen lassen.

Die Erfindung wird anhand der beigefügten Figuren beispielhaft erläutert. Es zeigen:
- Figur 1 -: Schematische Darstellung eines Ablegekopfes mit einer Elektrode;
- Figur 2 -: Schematische Darstellung eines Ablegekopfes mit einem vorgeschalteten Elektroden-Walzenpaar;
- Figur 3 -: Schematische Darstellung eines Ablegekopfes mit zwei Ablegeeinheiten;
- Figur 4 -: Schematische Darstellung eines Ablegekopfes mit vorgeschalteter Elektrode und Gegenelektrode;
- Figur 5 -: Schematische Darstellung eines Ablegekopfes mit gegenüberliegender Elektrode und Gegenelektrode;
- Figur 6 -: Schematische Darstellung einer Kontaktwalze in einer besonderen Ausführungsform

Nachfolgend wird anhand mehrerer Ausführungsbeispiele die Erfindung erläutert. Für dieselben Merkmale in den verschiedenen Figuren werden jeweils die gleichen Bezugsziffern verwendet.

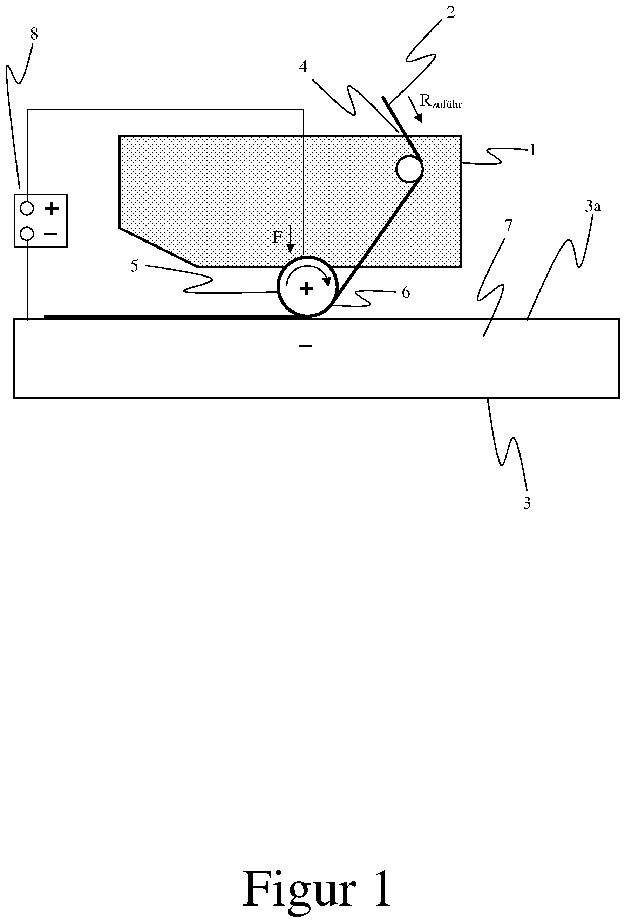

Figur 1 zeigt schematisch einen Ablegekopf 1, mit dem Faserhalbzeuge 2 auf ein Formwerkzeug 3 abgelegt werden können. Die Faserhalbzeuge 2 können dabei direkt auf die Werkzeugoberfläche 3a des Formwerkzeuges abgelegt werden oder, wenn ein mehrlagiger Aufbau des Fasergeleges hergestellt werden soll, auch auf bereits abgelegten Faserhalbzeugen.

Der Ablegekopf 1 weist eine Fasermaterialzuführung 4 auf, mit der dem Ablegekopf 1 die Faserhalbzeuge 2 zugeführt werden. Die Faserhalbzeuge 2 werden dabei über die Fasermaterialzuführung 4 von einer nicht dargestellten Materialbereitstellungseinrichtung zugeführt. Denkbar sind auch mehrere Fasermaterialzuführungen sowie Materialbereitstellungseinrichtungen.

Die über die Fasermaterialzuführung 4 zugeführten Faserhalbzeuge 2 werden dann über eine oder mehrere Umlenkrollen über mindestens eine Ablegeeinheit 5 geführt, die in den Ausführungsbeispielen der Figuren als Rolle bzw. Ablegewalze ausgebildet ist. Durch das Führen der Faserhalbzeuge 2 an der Unterseite drückt der Ablegekopf 1 über die Ablegewalze 5 die Fasermaterialien kontinuierlich auf das Werkzeug 3, wodurch die Faserhalbzeuge 2 auf oder in dem Formwerkzeug 3 abgelegt werden.

In dem dargestellten Ausführungsbeispiel der Figur 1 ist die Ablegerolle 5 elektrisch leitend so ausgebildet, dass sie die Elektrode 6 des Ablegekopfes 1 bildet. Hierfür kann die Ablegerolle 5 aus einem elektrisch leitfähigen Material bestehen oder von diesem ummantelt sein. Denkbar ist auch, dass die Ablegerolle 5 nur teilweise am Umfang mit einem elektrisch leitfähigen Material ausgestattet ist, um die Elektrode 6 des Ablegekopfes 1 zu bilden.

Als Gegenelektrode 7 dient im Ausführungsbeispiel der Figur 1 ein elektrisch leitfähiges Formwerkzeug 3, so dass ein Stromfluss zwischen der Elektrode 6 der Ablegerolle 5 und dem elektrisch leitfähigen Werkzeug 3 mit seiner Gegenelektrode 7 in den Faserhalbzeugen, die sich zwischen Ablegerolle 5 und Formwerkzeug 3 befinden, bewirkt. Hierzu sind die Elektrode 6 und die Gegenelektrode 7 mit einer Energiequelle 8 verbunden (bspw. eine Spannungsquelle), um eine entsprechende Spannung an der Elektrode und/oder Gegenelektrode zwecks Bewirkung des Stromflusses anzulegen.

Während des Ablegeprozesses wird darüber hinaus von dem Ablegekopf 1 und der Ablegerolle 5 eine Kraft F in Richtung Formwerkzeug 3 auf die abgelegten oder abzulegenden Faserhalbzeuge 2 aufgebracht, so dass es im Bereich der Ablegerolle 5 zu einer Kompaktierung des elektrisch leitfähigen Fasermaterials kommt. Durch die definierte Kompaktierung im Bereich der Ablegerolle 5 weisen die in diesem Bereich befindlichen Faserhalbzeuge bzw. das Fasermaterial einen geringeren Widerstand auf, als die umliegenden Bereiche, wodurch der Hauptstromfluss entsprechend festgelegt ist. Im Ausführungsbeispiel der Figur 1 ist dieser nahezu senkrecht von der Elektrode 6 in Richtung Formwerkzeug 3 als Gegenelektrode 7, was außerdem die Kontaktierung zwischen Elektrode 6 und Faserhalbzeug 2 verbessert.

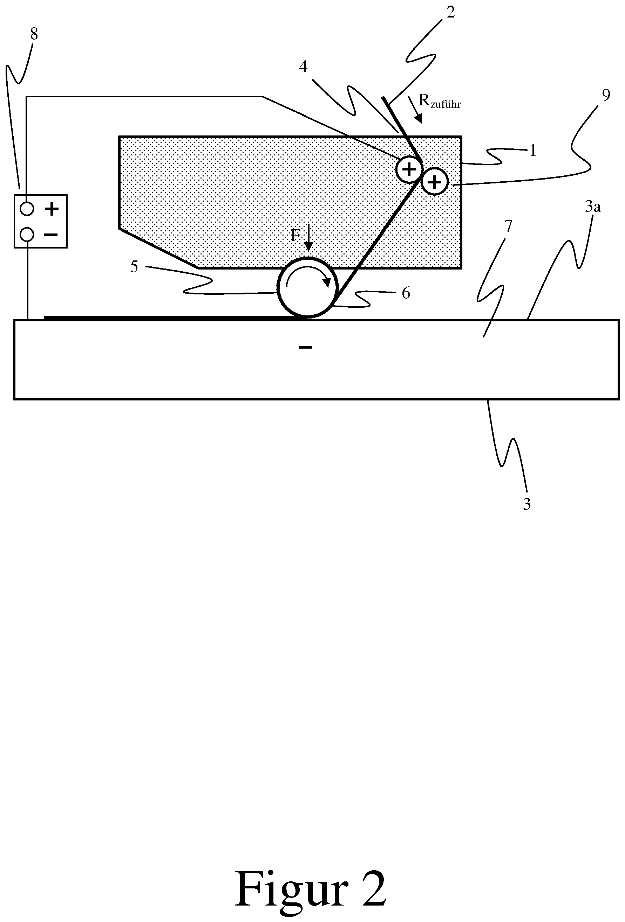

Bei Ablegeköpfen, bei denen die Ablegerolle bzw. die Ablegeeinheit 5 aus Silikon besteht, um so eine flexible Anpassung an Unebenheiten des Werkzeuges zu erreichen, ist das Anordnen einer Elektrode an der Ablegerolle 5 meist nicht sinnvoll. Gemäß dem Ausführungsbeispiel der Figur 2 wird hierfür vorgeschlagen, dass eine vorgeschaltete Kontakteinrichtung 9 die Elektrode 6 bildet. Im Ausführungsbeispiel der Figur 2 ist die Kontakteinrichtung 9 als Walzenpaar ausgebildet, so dass sowohl auf der einen Seite als auch auf der gegenüberliegenden anderen Seite der flächigen Faserhalbzeuge 2 die dem Ablegekopf 1 zugeführt werden, eine entsprechende Spannung angelegt werden kann. Auch in diesem Fall ist das Formwerkzeug als Gegenelektrode 7 ausgebildet, so dass hier ein Stromfluss von der Kontakteinrichtung 9 bis zum Kontaktpunkt der Faserhalbzeuge 2 mit dem Formwerkzeug 3 im Bereich der Ablegerolle 5 bewirkt wird.

Der Vorteil im Ausführungsbeispiel der Figur 2 besteht darin, dass ein in sich größerer Abschnitt der Faserhalbzeuge 2 mit Strom durchflossen werden, so dass hier mit einer gleichmäßigeren Erwärmung als im Beispiel der Figur 1 zu rechnen ist.

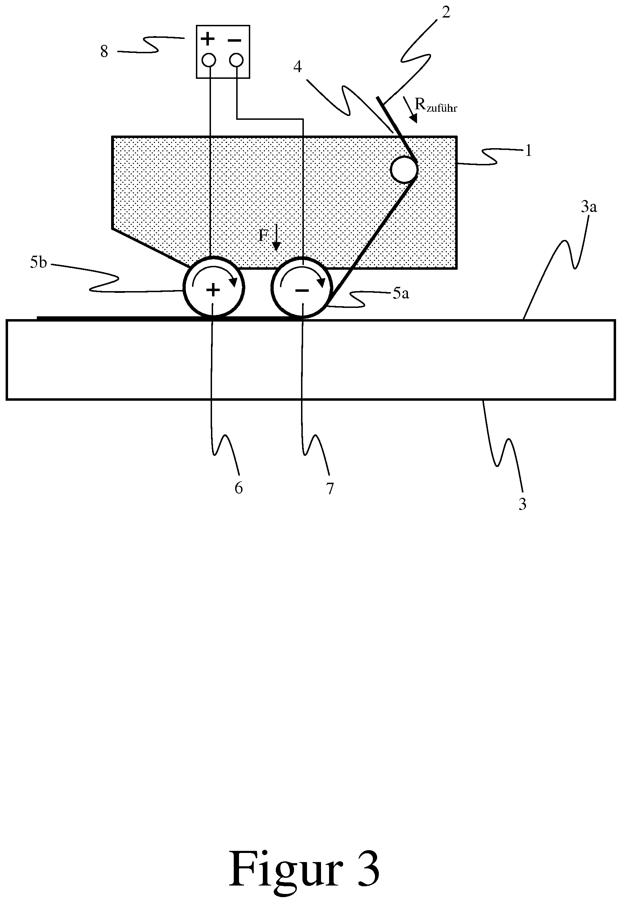

Da nicht jedes Formwerkzeug über eine elektrisch leitfähige Oberfläche verfügt, gilt es ebenfalls im Bereich der Erfindung die benötigte Gegenelektrode am oder im Ablegekopf 1 vorzusehen. Ein entsprechendes Ausführungsbeispiel zeigt Figur 3. Der dort dargestellte Ablegekopf 1 weist zwei Ablegeeinheiten 5a und 5b auf, die in Bezug zu der Zuführrichtung Rzuführ der zugeführten Faserhalbzeuge 2 nacheinander angeordnet sind. Denkbar ist auch, dass für ein Faserhalbzeug 2 die Ablegerollen 5a und 5b im Wesentlichen nebeneinander oder hintereinander angeordnet sind.

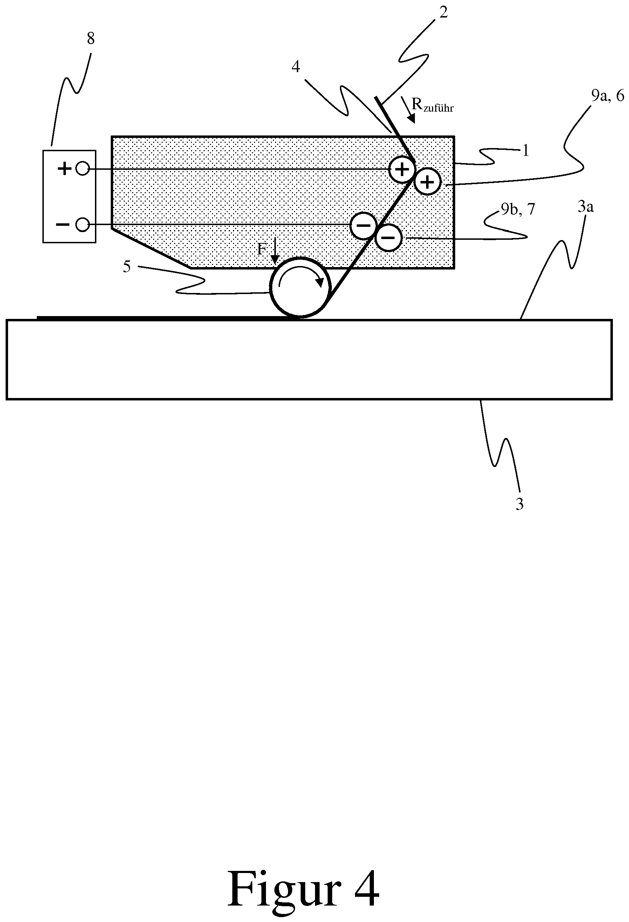

Im Ausführungsbeispiel der Figur 3 wird durch die vorausfahrende Ablegerolle 5a die Gegenelektrode 7 gebildet, während durch die nachlaufende Ablegerolle 5b die Elektrode 6 gebildet wird. In dem Bereich, in dem die zugeführten Faserhalbzeuge 2 die beiden Ablegerollen 5a und 5b kontaktieren, wird ein Stromfluss bewirkt, wenn eine entsprechende Spannung über die Energiequelle 8 angelegt wird. Hierdurch werden die Faserhalbzeuge bzw. die elektrisch leitenden Fasern der Faserhalbzeuge zwischen der Kontaktierung der Elektrode und der Gegenelektrode bestromt und somit erwärmt. Im Ausführungsbeispiel der Figur 4 weist der Ablegekopf 1 zwei Kontakteinrichtungen 9a und 9b auf, die jeweils die Elektrode 6 und die Gegenelektrode 7 bilden. In Figur 4 sind die Kontakteinrichtungen 9a und 9b jeweils als Walzenpaare ausgebildet, die jeweils zwei gegenüberliegende Walzen zur Kontaktierung der Faserhalbzeuge 2 aufweisen und mit einer definierten Kraft gegeneinander gepresst werden, so dass sich eine Kompaktierung der Fasern erreichen lässt. Hierzu werden die Faserhalbzeuge zwischen den beiden Walzen hindurch geführt, wobei die Walzen (einzeln oder zusammen) eine Kraft in Richtung der Faserhalbzeuge aufbringen. Die Faserhalbzeuge 2 werden so formschlüssig mit den Kontakteinrichtungen 9a und 9b kontaktiert, so dass ein hinreichender elektrischer Kontakt gewährleistet werden kann.

Der Stromfluss wird dann in den Faserhalbzeugen 2 in einem Abschnitt zwischen den beiden Kontakteinrichtungen 9 bewirkt. Auch das Ausführungsbeispiel der Figur 4 hat den Vorteil, dass kein elektrisch leitfähiges Formwerkzeug vorgesehen sein muss, um eine hinreichende Erwärmung durch Bestromung der Faserhalbzeuge zu erreichen. Des Weiteren wird in diesem Ausführungsbeispiel eine Funktionstrennung von Anpressung der Fasermaterialien und Erwärmung der Fasermaterialien erreicht, wodurch grundsätzlich verschiedenste Materialien für die Ablegerolle verwendet werden können.

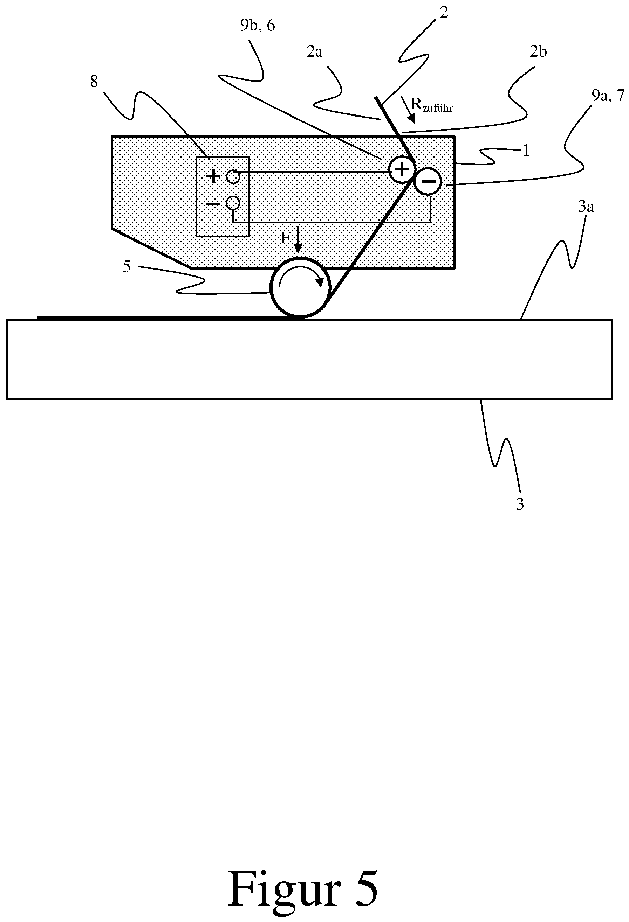

Figur 5 zeigt ähnlich wie Figur 1 eine linienförmige Erwärmung der Fasermaterialien 2, in dem eine Kontakteinrichtung 9a auf einer ersten Seite 2a der Faserhalbzeuge 2 kontaktierend anliegt, während an einer zweiten Seite 2b der Faserhalbzeuge 2 die zweite Kontakteinrichtung 9b kontaktierend anliegt. Die Kontakteinrichtung 9a ist dabei als Elektrode ausgebildet, während die Kontakteinrichtung 9b als Gegenelektrode ausgebildet ist, wodurch ein Stromfluss lediglich linienförmig in dem anliegenden Bereich der Faserhalbzeuge 2 von der ersten Seite 2a zur zweiten Seite 2b bewirkt wird.

Auch bei dieser Variante werden die Fasermaterialien zwischen den beiden Kontakteinrichtungen 9a und 9b, die als Walzen ausgebildet sind, kompaktiert, wodurch der Stromfluss in Z-Richtung des Materials, d.h. im Wesentlichen orthogonal zur Faserhalbzeugebene, bewirkt wird. Um den Energieeintrag zu erhöhen, ist auch eine Serienschaltung von Walzenpaaren denkbar.

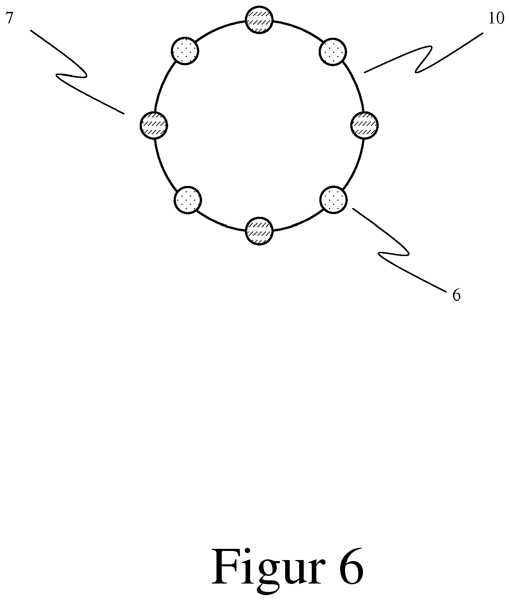

Figur 6 zeigt schematisch eine besondere Ausführungsform einer Kontaktwalze im Querschnitt, bei der um den Umfang herum mehrere Elektroden 6 und Gegenelektroden 7 angeordnet sind. Im Ausführungsbeispiel der Figur 6 sind Elektrode und Gegenelektrode dabei abwechselnd am Umfang angeordnet. Darüber hinaus sind die Elektroden und Gegenelektroden so angeordnet, dass sie von der Kontaktwalze 10 radial abstehen, so dass bei Kontaktierung mit einem Faserhalbzeug über diese abstehenden Elektroden und/oder Gegenelektroden eine zusätzliche Kontaktierungskraft aufgebracht werden kann.

Denkbar ist selbstverständlich auch, dass die Elektroden und/oder Gegenelektroden der Kontaktwalze 10 mit der Umfangsfläche bündig abschließen.

### Bezugszeichenliste

- 1 -: Faserhalbzeug-Ablegekopf
- 2 -: flächige Faserhalbzeuge
- 2a -: erste Seite der Faserhalbzeuge
- 2b -: zweite Seite der Faserhalbzeuge
- 3 -: Formwerkzeug
- 3a -: Werkzeugoberfläche
- 4 -: Fasermaterialzuführung
- 5 -: Ablegeeinheit, Ablegewalze
- 6 -: Elektrode
- 7 -: Gegenelektrode
- 8 -: Spannungsquelle
- 9,9a,9b -: Kontakteinrichtungen
- 10 -: Kontaktwalze
- F -: Anpresskraft
- R_{zuführ} -: Zuführrichtung der Faserhalbzeuge

## Patentansprüche

1. Faser-Legevorrichtung zur Herstellung eines Fasergeleges eines Faserverbundbauteils mit einem Formwerkzeug (3) zum Legen von Faserhalbzeugen und einem Faserhalbzeug-Ablegekopf (1) zum Legen von Faserhalbzeugen (2) in oder auf das Formwerkzeug (3), wobei der Faserhalbzeug-Ablegekopf (1) zum Zuführen der Faserhalbzeuge (2) durch eine Materialbereitstellungseinrichtung ausgebildet ist, wobei der Faserhalbzeug-Ablegekopf (1) mindestens eine mit einer elektrischen Energiequelle (8) zum Anlegen einer Spannung verbindbaren elektrischen Elektrode (6) aufweist, die mit den dem Faserhalbzeug-Ablegekopf (1) zugeführten Faserhalbzeugen (2) elektrisch kontaktiert ist, **dadurch gekennzeichnet, dass** die Elektrode (6) mit mindestens einer mit den Faserhalbzeugen (2) ebenfalls elektrisch kontaktierten Gegenelektrode (7) derart zusammenwirkt, dass in einem durch die Kontaktierung der mindestens einen Elektrode (6) des Faserhalbzeug-Ablegekopfes (1) und die Kontaktierung der mindestens einen Gegenelektrode (7) definierten Abschnitt der Faserhalbzeuge (2) ein Stromfluss bewirkt wird, wobei das Formwerkzeug (3) eine zumindest teilweise elektrisch leitende, formgebende Werkzeugoberfläche (3a) zur Bildung der Gegenelektrode (7) hat.

2. Faserlegevorrichtung nach Anspruch 1, **dadurch gekennzeichnet, dass** der Faserhalbzeug-Ablegekopf (1) mindestens eine Ablegeeinheit (5) aufweist, die zum Ablegen der dem Faserhalbzeug-Ablegekopf (1) zugeführten Faserhalbzeuge (2) in oder auf das Formwerkzeug (3) ausgebildet ist, wobei die mindestens eine Elektrode (6)
- an der mindestens einen Ablegeeinheit (5) zumindest teilweise angeordnet ist,
- aus der mindestens einen Ablegeeinheit (5) selbst gebildet ist, oder
- in Bezug auf die Zuführrichtung (R_{zuführ}) der zugeführten Faserhalbzeuge (2) vor oder nach der Ablegeeinheit (5) angeordnet ist.

3. Faserlegevorrichtung nach Anspruch 1 oder 2, **dadurch gekennzeichnet, dass** der Faserhalbzeug-Ablegekopf (1) mindestens eine weitere Gegenelektrode (7) aufweist.

4. Faserlegevorrichtung nach Anspruch 3, **dadurch gekennzeichnet, dass** die mindestens eine weitere Gegenelektrode (7) in Bezug auf die Zuführrichtung (R_{zuführ}) der zugeführten Faserhalbzeuge (2) vor oder nach der mindestens einen Elektrode (6) beabstandet angeordnet ist.

5. Faserlegevorrichtung nach Anspruch 3 oder 4, **dadurch gekennzeichnet, dass** der Faserhalbzeug-Ablegekopf (1) mindestens eine Ablegeeinheit (5) aufweist, die zum Ablegen der dem Faserhalbzeug-Ablegekopf (1) zugeführten Faserhalbzeuge (2) in oder auf das Formwerkzeug (3) ausgebildet ist, wobei die mindestens eine weitere Gegenelektrode (7) in Bezug auf die Zuführrichtung (R_{zuführ}) der zugeführten Faserhalbzeuge (2) vor oder nach der Ablegeeinheit (5) beabstandet angeordnet ist.

6. Faserlegevorrichtung nach Anspruch 3, **dadurch gekennzeichnet, dass** der Faserhalbzeug-Ablegekopf (1) mindestens eine erste Ablegeeinheit (5b) und mindestens eine zu der ersten Ablegeeinheit (5b) beabstandet angeordnete zweite Ablegeeinheit (5a) hat, die zum Ablegen der dem Faserhalbzeug-Ablegekopf (1) zugeführten Faserhalbzeuge (2) in oder auf das Formwerkzeug (3) ausgebildet sind, wobei
- die mindestens eine Elektrode (6) zur elektrischen Kontaktierung mit den zugeführten Faserhalbzeugen (2) an der ersten Ablegeeinheit (5b) angeordnet oder aus dieser selbst gebildet ist und
- die mindestens eine weitere Gegenelektrode (7) zur elektrischen Kontaktierung mit den zugeführten Faserhalbzeugen (2) an der zweiten Ablegeeinheit (5a) angeordnet oder aus dieser selbst gebildet ist.

7. Faserlegevorrichtung nach Anspruch 3, **dadurch gekennzeichnet, dass** die mindestens eine Elektrode (6) so angeordnet ist, dass die zugeführten Faserhalbzeuge (2) an einer ersten Seite (2a) mit der Elektrode (6) elektrisch kontaktiert sind und die mindestens eine weitere Gegenelektrode (7) so angeordnet ist, dass die zugeführten Faserhalbzeuge (2) an einer der ersten Seite (2a) gegenüberliegenden zweiten Seite (2b) mit der Gegenelektrode (7) elektrisch kontaktiert sind.

8. Faserlegevorrichtung nach einem der Ansprüche 2 bis 7, **dadurch gekennzeichnet, dass** mindestens eine der Ablegeeinheiten (5) als Ablegewalze ausgebildet ist.

9. Faserlegevorrichtung nach einem der vorhergehenden Ansprüche, **dadurch gekennzeichnet, dass** der Faserhalbzeug-Ablegekopf mindestens eine Walze hat, die über einer Umfangsfläche mit den zugeführten Faserhalbzeugen kontaktiert ist und die in ihrer Umfangsfläche die mindestens eine Elektrode (6) und/oder die weitere Gegenelektrode (7) zur elektrischen Kontaktierung mit den Faserhalbzeugen (2) aufweist.

10. Faserlegevorrichtung nach einem der vorhergehenden Ansprüche, **dadurch gekennzeichnet, dass** die mindestens eine Elektrode (6), weitere Gegenelektrode (7), mindestens eine der Ablegeeinheiten und/oder der Faserhalbzeug-Ablegekopf zum Aufbringen einer Kraft in Richtung der zugeführten Faserhalbzeuge (2) zur Kompaktierung der Fasern der Faserhalbzeuge (2) ausgebildet sind.

11. Faserlegevorrichtung nach einem der vorhergehenden Ansprüche, **dadurch gekennzeichnet, dass** eine Leistungsregeleinheit vorgesehen ist, die zum Regeln der elektrischen Leistung des in dem Faserhalbzeug (2) bewirkten Stromflusses in Abhängigkeit von einer Geschwindigkeit des Faserhalbzeug-Ablegekopfes eingerichtet ist.

12. Faserlegevorrichtung nach einem der vorhergehenden Ansprüche, **dadurch gekennzeichnet, dass** der Faserhalbzeug-Ablegekopf eine Mehrzahl von elektrischen Elektroden (6) und/oder elektrischen Gegenelektroden (7) hat, wobei eine Elektrodensteuereinheit vorgesehen ist, die eingerichtet ist, nacheinander jeweils an einem der Elektroden (6) eine elektrische Spannung anzulegen und die übrigen Elektroden und/oder Gegenelektroden derart zu schalten, dass ein Stromfluss zwischen der jeweiligen Elektrode und einer vorgegebenen Gegenelektrode bewirkt wird.

13. Verfahren zum Legen von Faserhalbzeugen (2) in oder auf einem Formwerkzeug mit
a) Bereitstellen eines Faserhalbzeug-Ablegekopfes, der ihm zugeführte Faserhalbzeuge (2) in oder auf das Formwerkzeug (3) ablegt, wobei der Faserhalbzeug-Ablegekopf mindestens eine elektrische Elektrode (6) zum elektrischen Kontaktieren der zugeführten Faserhalbzeuge (2) hat, **gekennzeichnet durch** die folgenden Schritte:
b) Bereitstellen mindestens einer Gegenelektrode (7) zum elektrischen Kontaktieren der Faserhalbzeuge (2), wobei ein Formwerkzeug (3) mit einer zumindest teilweise elektrisch leitenden, formgebenden Werkzeugoberfläche (3a) zur Bildung der Gegenelektrode (7) bereitgestellt wird, wobei mittels des Faserhalbzeug-Ablegekopfes Faserhalbzeuge (2) auf die Werkzeugoberfläche (3a) abgelegt werden, und
c) Anlegen einer Spannung an die mindestens eine Elektrode (6) und/oder Gegenelektrode (7) zum Erzeugen eines Stromflusses in einem durch die Kontaktierung der mindestens einen Elektrode (6) des Faserhalbzeug-Ablegekopfes und die Kontaktierung der mindestens einen Gegenelektrode (7) definierten Abschnitt der Faserhalbzeuge (2), wenn die Faserhalbzeuge (2) in oder auf das Formwerkzeug (3) abgelegt werden.

14. Verfahren nach Anspruch 13, **dadurch gekennzeichnet, dass** eine Anpresskraft durch die mindestens eine Elektrode (6) und/oder den Faserhalbzeug-Ablegekopf selbst in Richtung der Faserhalbzeuge (2) zur Kompaktierung der Fasern der Faserhalbzeuge (2) aufgebracht wird.

## Claims

1. Fibre laying device for producing a fibre fabrics of a fibre composite component with a forming tool (3) for laying fibre semi-finished products and a fibre semi-finished product laying head (1) for laying fibre semi-finished products (2) in or on the forming tool (3), wherein the semi-finished fibre laying head (1) is designed for feeding the semi-finished fibre products (2) by a material supply device, wherein the semi-finished fibre laying head (1) has at least one electrical electrode (6) connectable to an electrical energy source (8) for applying a voltage which is electrically contacted with the semi-finished fibre products (2) supplied to the semi-finished fibre laying head (1), **characterised in that** the electrode (6) cooperates with at least one counter-electrode (7), which is also electrically contacted with the semi-finished fibre products (2), in such a way, that a current flow is effected in a section of the semi-finished fibre products (2) defined by the contacting of the at least one electrode (6) of the semi-finished fibre product laying head (1) and the contacting of the at least one counter electrode (7), wherein the forming tool (3) has an at least partially electrically conductive, shaping tool surface (3a) for forming the counter electrode (7).

2. Fibre laying device according to claim 1, **characterised in that** the semi-finished fibre laying head (1) has at least one laying unit (5) which is designed for laying the semi-finished fibre products (2) supplied to the semi-finished fibre laying head (1) in or on the forming tool (3), wherein the at least one electrode (6)
- is at least partially arranged on the at least one laying unit (5),
- is formed from the at least one laying unit (5) itself, or
- is arranged before or after the laying unit (5) with respect to the feeding direction (R_{zuführ}) of the supplied semi-finished fibre products (2).

3. Fibre laying device according to claim 1 or 2, **characterised in that** the fibre semi-finished product laying head (1) has at least one further counter electrode (7).

4. Fibre laying device according to claim 3, **characterised in that** the at least one further counter electrode (7) is arranged at a distance before or after the at least one electrode (6) with respect to the feeding direction (R_{zuführ}) of the supplied semi-finished fibre products (2).

5. Fibre laying device according to claim 3 or 4, **characterised in that** the fibre semi-finished product laying head (1) has at least one laying unit (5) which is designed for laying the fibre semi-finished products (2) supplied to the fibre semi-finished product laying head (1) in or on the forming tool (3), wherein the at least one further counter electrode (7) is arranged at a distance before or after the laying unit (5) with respect to the feeding direction (R_{zuführ}) of the supplied fibre semi-finished products (2).

6. Fibre laying device according to claim 3, **characterised in that** the fibre semi-finished product laying head (1) has at least one first laying unit (5b) and at least one second laying unit (5a) arranged at a distance from the first laying unit (5b), which are designed for laying the fibre semi-finished products (2) supplied to the fibre semi-finished product laying head (1) in or on the moulding tool (3), wherein
- the at least one electrode (6) for making electrical contact with the supplied semi-finished fibre products (2) is arranged on the first laying unit (5b) or is formed from the laying unit itself, and
- the at least one further counter electrode (7) for electrical contact with the supplied semi-finished fibre products (2) is arranged on the second laying unit (5a) or is formed from the laying unit itself.

7. Fibre laying device according to claim 3, **characterized in that** the at least one electrode (6) is arranged in such a way that the supplied semi-finished fibre products (2) are electrically contacted with the electrode (6) on a first side (2a) and the at least one further counter electrode (7) is arranged in such a way that the supplied semi-finished fibre products (2) are electrically contacted with the counter electrode (7) on a second side (2b) opposite the first side (2a).

8. Fibre laying device according to one of claims 2 to 7, **characterised in that** at least one of the laying units (5) is designed as a laying roller.

9. Fibre laying device according to one of the preceding claims, **characterised in that** the fibre semi-finished product laying head has at least one roller which is in contact over a peripheral surface with the supplied fibre semi-finished products and which has in its peripheral surface the at least one electrode (6) and/or the further counter electrode (7) for electrical contact with the fibre semi-finished products (2).

10. Fibre laying device according to one of the preceding claims, **characterised in that** the at least one electrode (6), further counter electrode (7), at least one of the laying units and/or the fibre semi-finished product laying head are designed to apply a force in the direction of the supplied fibre semi-finished products (2) for compacting the fibres of the fibre semi-finished products (2).

11. Fibre laying device according to one of the preceding claims, **characterised in that** a power control unit is provided which is arranged to regulate the electrical power of the current flow caused in the semi-finished fibre product (2) in dependence on a speed of the semi-finished fibre product laying head.

12. Fibre laying device according to one of the preceding claims, **characterised in that** the fibre semi-finished product laying head has a plurality of electrical electrodes (6) and/or electrical counter electrodes (7), wherein an electrode control unit is provided which is arranged to apply an electrical voltage successively to one of the electrodes (6) in each case and to switch the remaining electrodes and/or counter electrodes in such a way that a current flow is effected between the respective electrode and a predetermined counter-electrode.

13. Method for laying semi-finished fibre products (2) in or on a moulding tool with
a) provision of a semi-finished fibre depositing head which lay semi-finished fibre products (2) supplied to it in or on the moulding tool (3), wherein the semi-finished fibre laying head having at least one electrical electrode (6) for electrically contacting the semi-finished fibre products (2) supplied to it,
**characterised by** the following steps:
b) providing at least one counter electrode (7) for electrically contacting the semi-finished fibre products (2), wherein a forming tool (3) with an at least partially electrically conductive, shaping tool surface (3a) for forming the counter-electrode (7) is provided, wherein semi-finished fibre products (2) are laid on the tool surface (3a) by means of the semi-finished fibre laying head, and
c) Applying of a voltage to the at least one electrode (6) and/or counter electrode (7) for generating a current flow in a section of the semi-finished fibre products (2) defined by the contacting of the at least one electrode (6) of the semi-finished fibre product laying head and the contacting of the at least one counter electrode (7), when the semi-finished fibre products (2) are laid in or on the forming tool (3).

14. Method according to claim 13, **characterised in that** a contact pressure force is applied by the at least one electrode (6) and/or the semi-finished fibre laying head itself in the direction of the semi-finished fibres (2) for compacting the fibres of the semi-finished fibres (2).

## Revendications

1. Dispositif de pose de fibres pour la réalisation d'une nappe de fibres d'une pièce composite en fibres, comprenant un outil de formage (3) pour la pose de produits semi-finis en fibres et une tête de pose de produits semi-finis en fibres (1) pour la pose de produits semi-finis en fibres (2) dans ou sur l'outil de formage (3), la tête de pose de produits semi-finis en fibres (1) étant réalisée pour amener les produits semi-finis en fibres (2) par un système d'amenée de matériau,
dans lequel
la tête de pose de produits semi-finis en fibres (1) comporte au moins une électrode électrique (6) qui peut être connectée à une source d'énergie électrique (8) pour appliquer une tension et qui est en contact électrique avec les produits semi-finis en fibres (2) amenés à la tête de pose de produits semi-finis en fibres (1),
**caractérisé en ce que**
l'électrode (6) coopère avec au moins une contre-électrode (7) également en contact électrique avec les produits semi-finis en fibres (2) de telle manière qu'un flux de courant est provoqué dans une portion des produits semi-finis en fibres (2) définie par la mise en contact de ladite au moins une électrode (6) de la tête de pose de produits semi-finis en fibres (1) et la mise en contact de ladite au moins une contre-électrode (7), l'outil de formage (3) ayant une surface de mise en forme (3a) au moins partiellement électriquement conductrice pour former la contre-électrode (7).

2. Dispositif de pose de fibres selon la revendication 1,
**caractérisé en ce que**
la tête de pose de produits semi-finis en fibres (1) comporte au moins une unité de pose (5) qui est réalisée pour poser les produits semi-finis en fibres (2) amenés à la tête de pose de produits semi-finis en fibres (1) dans ou sur l'outil de formage (3),
ladite au moins une électrode (6)
- est disposée au moins partiellement sur ladite au moins une unité de pose (5),
- est formée par ladite au moins une unité de pose (5) elle-même, ou
- est disposée avant ou après l'unité de pose (5) par rapport à la direction d'amenée (R_{zuführ}) des produits semi-finis en fibres (2) amenés.

3. Dispositif de pose de fibres selon la revendication 1 ou 2,
**caractérisé en ce que**
la tête de pose de produits semi-finis en fibres (1) comprend au moins une autre contre-électrode (7).

4. Dispositif de pose de fibres selon la revendication 3,
**caractérisé en ce que**
ladite au moins une autre contre-électrode (7) est disposée à distance avant ou après ladite au moins une électrode (6) par rapport à la direction d'amenée (R_{zuführ}) des produits semi-finis en fibres (2) amenés.

5. Dispositif de pose de fibres selon la revendication 3 ou 4,
**caractérisé en ce que**
la tête de pose de produits semi-finis en fibres (1) comprend au moins une unité de pose (5) réalisée pour la pose des produits semi-finis en fibres (2), amenés à la tête de pose de produits semi-finis en fibres (1), dans ou sur l'outil de formage (3), ladite au moins une autre contre-électrode (7) étant disposée à distance avant ou après l'unité de pose (5) par rapport à la direction d'amenée (R_{zuführ}) des produits semi-finis en fibres (2) amenés.

6. Dispositif de pose de fibres selon la revendication 3,
**caractérisé en ce que**
la tête de pose de produits semi-finis en fibres (1) comprend au moins une première unité de pose (5b) et au moins une seconde unité de pose (5a) disposée à distance de la première unité de pose (5b), qui sont réalisées pour la pose des produits semi-finis en fibres (2), amenés à la tête de pose de produits semi-finis en fibres (1), dans ou sur l'outil de formage (3),
et
- ladite au moins une électrode (6) destinée à la mise en contact électrique avec les produits semi-finis en fibres (2) amenés est disposée sur la première unité de pose (5b) ou est formée elle-même par celle-ci, et
- ladite au moins une autre contre-électrode (7) destinée à la mise en contact électrique avec les produits semi-finis en fibres (2) amenés est disposée sur la seconde unité de pose (5a) ou est formée elle-même par celle-ci.

7. Dispositif de pose de fibres selon la revendication 3,
**caractérisé en ce que**
ladite au moins une électrode (6) est disposée de telle sorte que les produits semi-finis en fibres (2) amenés sont mis en contact électrique avec l'électrode (6) sur un premier côté (2a), et ladite au moins une autre contre-électrode (7) est disposée de telle sorte que les produits semi-finis en fibres (2) amenés sont mis en contact électrique avec la contre-électrode (7) sur un second côté (2b) opposé au premier côté (2a).

8. Dispositif de pose de fibres selon l'une des revendications 2 à 7,
**caractérisé en ce que**
l'une au moins des unités de pose (5) est réalisée sous forme de cylindre de pose.

9. Dispositif de pose de fibres selon l'une des revendications précédentes,
**caractérisé en ce que**
la tête de pose de produits semi-finis en fibres comprend au moins un cylindre qui est mis en contact, sur une surface périphérique, avec les produits semi-finis en fibres amenés, et qui comprend, dans sa surface périphérique, ladite au moins une électrode (6) et/ou l'autre contre-électrode (7) pour la mise en contact électrique avec les produits semi-finis en fibres (2).

10. Dispositif de pose de fibres selon l'une des revendications précédentes,
**caractérisé en ce que**
ladite au moins une électrode (6), l'autre contre-électrode (7), l'une au moins des unités de pose et/ou la tête de pose de produits semi-finis en fibres sont réalisées pour appliquer une force en direction des produits semi-finis en fibres (2) amenés en vue de compacter les fibres des produits semi-finis en fibres (2).

11. Dispositif de pose de fibres selon l'une des revendications précédentes,
**caractérisé en ce que**
il est prévu une unité de régulation de puissance qui est conçue pour réguler la puissance électrique du flux de courant provoqué dans le produit semi-fini en fibres (2), en fonction d'une vitesse de la tête de pose de produits semi-finis en fibres.

12. Dispositif de pose de fibres selon l'une des revendications précédentes,
**caractérisé en ce que**
la tête de pose de produits semi-finis en fibres comprend une pluralité d'électrodes électriques (6) et/ou de contre-électrodes électriques (7), et il est prévu une unité de commande d'électrode qui est conçue pour appliquer une tension électrique successivement à l'une des électrodes (6) et pour commuter les électrodes et/ou contre-électrodes restantes de manière à provoquer un flux de courant entre l'électrode respective et une contre-électrode prédéterminée.

13. Procédé de pose de produits semi-finis en fibres (2) dans ou sur un outil de formage, comprenant :
a) la mise à disposition d'une tête de pose de produits semi-finis en fibres (1) qui pose des produits semi-finis en fibres (2) qui lui sont amenés dans ou sur l'outil de formage (3), la tête de pose de produits semi-finis en fibres comprenant au moins une électrode électrique (6) pour la mise en contact électrique avec les produits semi-finis en fibres (2) amenés,
**caractérisé par** les étapes suivantes consistant à :
b) fournir au moins une contre-électrode (7) pour la mise en contact électrique avec les produits semi-finis en fibres (2), et à fournir un outil de formage (3) présentant au moins une surface de mise en forme (3a) au moins partiellement électriquement conductrice pour former la contre-électrode (7), et des produits semi-finis en fibres (2) sont posés sur la surface (3a) de l'outil au moyen de la tête de pose de produits semi-finis en fibres, et
c) appliquer une tension à ladite au moins une électrode (6) et/ou à la contre-électrode (7) pour générer un flux de courant dans une portion des produits semi-finis en fibres (2) définie par la mise en contact de ladite au moins une électrode (6) de la tête de pose de produits semi-finis en fibres et la mise en contact de ladite au moins une contre-électrode (7), lorsque les produits semi-finis en fibres (2) sont posés dans ou sur l'outil de formage (3).

14. Procédé selon la revendication 13,
**caractérisé en ce que**
une force de pressage est appliquée par ladite au moins une électrode (6) et/ou par la tête de pose de produits semi-finis en fibres elle-même en direction des produits semi-finis en fibres (2) en vue de compacter les fibres des produits semi-finis en fibres (2).
